# EUROPÄISCHE PATENTANMELDUNG

(11) **EP 4 744 867 A1**
(43) Veröffentlichungstag der Anmeldung: **20.05.2026**
(21) Anmeldenummer: 25207088.3
(22) Anmeldetag: 07.10.2025
(51) Int. Cl.: B29C 64/35, B29C 64/379

(54) **SPANNVORRICHTUNG**

(30) Priorität: 15.11.2024 DE 102024133496
(71) Anmelder: Rösler Holding GmbH, 96231 Bad Staffelstein (DE)
(72) Erfinder: AMON, Sven, 96187 Stadelhofen (DE); BUNK, Felix, 96052 Bamberg (DE); BRAUNROTH, Domenik, 96450 Coburg (DE)
(74) Vertreter: Manitz Finsterwald Patent- und Rechtsanwaltspartnerschaft mbB

(57) **Zusammenfassung**

Eine Spannvorrichtung weist eine Spannaufnahme (12) auf, deren Spannkörper (18, 20, 40) pulverdurchlässig ist, wobei die Spannaufnahme (12) auch bei einer Volumenverringerung des Bauteils (10) gegen das Bauteil (10) gespannt bleibt.

## Beschreibung

Die Erfindung betrifft eine Spannvorrichtung für zumindest ein additiv gefertigtes Bauteil für ein erleichtertes Handling und für eine Bearbeitung mit mindestens einem Bearbeitungsprozess, wie Entpulverung, Oberflächenbearbeitung oder Reinigung im nicht entpulverten oder auch entpulverten Zustand.

Bei der Bearbeitung, Behandlung, Reinigung, Entpulverung oder Entsandung von Bauteilen in Sichtlinienprozessen (z.B. Bürsten, Abblasen, Strahlen, Sprühen mit Gasen, Flüssigkeiten, Feststoffen oder Kombinationen hieraus) werden Bauteile festgespannt und anschließend der Bearbeitung unterzogen. Zum Festspannen kommen bislang üblicherweise u. a. Schraubstöcke, Spannpratzen, Spannzangen, Spannfutter, Schrauben oder auch Magnet- oder Vakuumspannsysteme zum Einsatz. Diese Systeme können in Kombination mit dem Bauteil auch zur Weitergabe bzw. zum Handling des Bauteils dienen, beispielsweise bei Nullpunktspannsystemen.

Bei z.B. im Pulverbettverfahren additiv gefertigten Bauteilen kann es aufgrund von anhaftendem Pulver dazu kommen, dass eine Bauteilaufspannung durch die genannten Lösungen entweder nicht möglich ist oder dass manuelle oder automatisierte Vorprozesse zur Entpulverung durchgeführt werden müssen. Wird das Pulver nicht oder nur unzureichend vor einer Bauteilaufspannung entfernt, kann das Bauteil während der Bearbeitung durch die Entfernung des Pulvers lose werden, wodurch Beschädigungen des Bauteils und der Maschine verursacht werden können.

Zudem kann es beim Festspannen von dünnwandigen oder empfindlichen Bauteilen aufgrund der Spannkräfte zu einer Beschädigung kommen. Auch durch komplexe Geometrien bei additiv gefertigten Bauteilen und der damit verbundenen geringen oder fehlenden Spannfläche kann es durch die auftretende Punktlast und die damit verbundene lokale Überlastung zu Beschädigungen kommen.

Da keine universelle Spannmöglichkeit für individuelle Bauteile existiert, werden oftmals auf die Bauteilgeometrie angepasste, bauteilspezifische Lösungen verwendet. Auch diese aufwendigen Lösungen erfordern jedoch z.B. die vorherige Entpulverung des Bauteils.

Bei der Reinigung oder der Entpulverung kann es durch das Einspannen zu einer Verdeckung oder Abgrenzung von Teilbereichen kommen, an denen sich Material wie Pulver oder Strahlmedium aufstaut. Außerdem wird die Bearbeitung der Oberfläche in diesem Bereich verhindert, wodurch es zur Bildung von sogenannten Strahlschatten kommen kann. Bei einer Umspannung des Bauteils kann das Material verschleppt oder wieder freigesetzt werden, wodurch bereits gereinigte oder bearbeitete Bereiche erneut kontaminiert werden können. Beim wirtschaftlich unvorteilhaften und bei häufigem manuellen Umspannen besteht durch die mechanische Belastung darüber hinaus die erneute Gefahr der Bauteilschädigung.

Es ist deshalb die Aufgabe der vorliegenden Erfindung, eine kostengünstige Spannvorrichtung für ein additiv gefertigtes Bauteil zu schaffen, mit der auch empfindliche oder komplexe Bauteile beschädigungsfrei gehandhabt und bearbeitet werden können.

Die Lösung dieser Aufgabe erfolgt durch eine Spannvorrichtung mit den Merkmalen des Anspruchs 1.

Die erfindungsgemäße Spannvorrichtung weist eine Spannaufnahme auf, deren Spannkörper pulverdurchlässig ist, wobei die Spannaufnahme durch einen Spannkrafterzeuger auch bei einer Volumenverringerung des Bauteils während dessen Bearbeitung gegen dieses gespannt bleibt.

Hierbei wird unter dem Spannkörper der Spannaufnahme der Bereich verstanden, der dazu dient, mit dem Bauteil in Kontakt zu treten, wobei der Spannkörper nicht auf denjenigen Bereich beschränkt ist, der im eingespannten Zustand tatsächlich an dem Bauteil anliegt. Da erfindungsgemäß der Spannkörper pulverdurchlässig ist und auch bei einer Volumenverringerung des Bauteils, beispielsweise während eines Entpulverungsvorgangs, gegen das Bauteil gespannt bleibt, da der Spannkrafterzeuger eine Kraft in Richtung des Bauteils ausübt, bleibt das Bauteil auch bei einer Volumenverringerung innerhalb der Spannvorrichtung eingespannt. Durch das pulverdurchlässige Material des Spannkörpers kann einerseits ein Fluidstrom durch die Spannvorrichtung hindurchgeleitet werden, um Pulver von dem Bauteil zu lösen. Andererseits kann gleichzeitig Pulver und/oder Strahlmittel aus der Spannvorrichtung herausgeführt werden.

Vorteilhafte Ausführungsformen der Erfindung sind in der Beschreibung, der Zeichnung sowie den Unteransprüchen beschrieben.

Nach einer ersten vorteilhaften Ausführungsform kann der Spannkrafterzeuger durch die Elastizität des Spannkörpers gebildet sein. In diesem Fall wird die Bauteilfixierung in der Spannvorrichtung durch eine inhärente Spannung des Materials des Spannkörpers sichergestellt, der beispielsweise einen elastisch dehnbaren Bahnmaterialabschnitt aus einem Sieb- oder Netzmaterial umfassen kann. Durch ein elastisches Einspannen des Bauteils mit Vorspannung kann sich der Spannkörper selbst nachspannen und somit ein oder mehrere Bauteile, die während der Bearbeitung, Reinigung, Entpulverung oder Entsandung kleiner werden, ausreichend fixieren. Alternativ oder zusätzlich kann die Spannung des Spannkörpers auch durch einen Spannkrafterzeuger aufgebracht werden, der den Spannkörper mit einer äußeren Kraft beaufschlagt.

Nach einer weiteren vorteilhaften Ausführungsform kann die Spannaufnahme aus mehreren miteinander koppelbaren Aufnahmeelementen gebildet sein, die insbesondere jeweils einen Rahmen aufweisen. So können beispielsweise zwei rahmenartige Aufnahmeelemente vorgesehen sein, an denen jeweils ein elastisches Sieb oder Netz als Spannkörper angebracht ist. Durch Kopplung der beiden Rahmen miteinander ist dann ein zwischen den beiden Spannkörpern angeordnetes Bauteil fest aber beschädigungsfrei eingespannt. Hierbei kann ein Bauteil zunächst auf einem Aufnahmeelement abgelegt werden. Das Ablegen kann manuell oder automatisiert erfolgen. Die automatisierte Zuführung kann auch als direkte oder indirekte Folge eines vorgelagerten Prozessschritts erfolgen.

Der Spannkörper kann selbst an einer Halterung, beispielsweise dem Rahmen, befestigt oder aufgespannt sein. Optional wird ein zweites Aufnahmeelement auf das erste aufgesetzt und die beiden Aufnahmeelemente werden miteinander verbunden und fixiert. Hierbei kann sich der Spannkörper elastisch an die Bauteilkontur angleichen. Durch die elastische Formänderung des Spannkörpers und die dadurch resultierende Krafteinwirkung auf das Bauteil wird dieses fixiert.

An der Spannvorrichtung kann weiter eine Maschinenhalterung, also ein Befestigungselement vorhanden sein, welches als Aufnahme zum Handling und zur Befestigung der Spannvorrichtung dient. Diese kann durch die Halterung direkt in einer Maschine, einem Schraubstock oder einer anderen Schnittstelle festgespannt werden, oder an einer weiteren tragenden Struktur montiert werden, welche sich in zumindest eine Bearbeitungszone bewegt. Die gesamte Spannvorrichtung kann anschließend z.B. durch rotatorische oder translatorische Achsen so bewegt werden, dass eine Bearbeitung von allen Seiten möglich ist. Nach der Bearbeitung kann das Bauteil in der Spannvorrichtung verbleiben, um weiterführende Bearbeitungen oder Reinigungsschritte zu durchlaufen. Durch die auf die Bearbeitungssituation und das Bauteilgewicht individuell angepasste Spannkraft kann eine geringe Relativbewegung des Bauteils zur Spannvorrichtung sichergestellt werden.

Nach einer weiteren vorteilhaften Ausführungsform kann die Spannaufnahme zumindest ein Trennelement aufweisen, durch das innerhalb der Spannaufnahme zumindest zwei Abteile gebildet sind. Wenn mehrere Bauteile in der Spannvorrichtung gespannt werden sollen, kann ein Trennelement zu einer räumlichen Trennung der Bauteile führen. Dadurch wird ein Berühren der Bauteile untereinander vermieden, wodurch die Gefahr der Beschädigung und der Überdeckung (Strahlschatten) verringert wird.

Nach einer weiteren vorteilhaften Ausführungsform kann der Spannkörper einen verformbaren Materialbahnabschnitt aufweisen, insbesondere ein Sieb und/oder ein (dünnes) Drahtgitter aus Metall oder Kunststoff. Hierbei können neben geradlinigen Gitteranordnungen auch Schräggitter oder Wabenstrukturen verwendet werden. Die Spannkörper können beispielsweise additiv hergestellt, geschnitten, gewebt, zerspant, geschweißt, gefügt, gegossen, gestanzt oder extrudiert werden und zweidimensional oder dreidimensional ausgestaltet sein. In Abhängigkeit von Bauteilgeometrie und Gewicht können verschiedenartige Gitter- bzw. Siebstrukturen verwendet werden. Das Design und die Maschenweite können passend gewählt werden. Die verwendeten Spannkörper können eine unterschiedliche Filament- bzw. Strangstärke aufweisen, wodurch die Spannkraft fallspezifisch angepasst werden kann.

Nach einer weiteren vorteilhaften Ausführungsform kann der Spannkörper beispielsweise aus einem elastisch dehnbaren Netzmaterial gebildet sein. Innerhalb der Netze können eigene Wandelemente oder zusätzliche Einsätze vorhanden sein, die zur räumlichen Trennung der Bauteile führen, um eine Berührung der Bauteile untereinander und somit die Gefahr einer Beschädigung oder Überdeckung zu vermeiden.

Der Spannkörper kann jeweils einzelne oder mehrere Netze, Siebe, Lochplatten und -folien, Schalen mit Bohrungen, perforierte Beutel oder Tüten, Körbe oder Kombinationen hieraus aufweisen. In Abhängigkeit von Bauteilgeometrie und Form können verschiedenartige Werkstoffe für den Spannkörper gewählt werden. Der Werkstoff wird so ausgewählt, dass das Bauteil im Falle einer Entpulverung und somit einer Verringerung der Maße des Bauteils (Verkleinerung) noch mit genügend Spannkraft eingespannt ist und sich dabei in der Spannaufnahme auch geringfügig bewegen kann. Die Bewegung des Bauteils relativ zum Spannelement kann dabei mindestens in etwa der Breite der Haltestruktur entsprechen.

Alternativ können als Spannkörper auch mehrere Einzelelemente wie Fäden, Schnüre, Drähte, Leinen, perforierte Streifen und Bänder, Seile oder Kombinationen hieraus verwendet werden.

Nach einer weiteren vorteilhaften Ausführungsform kann die Spannung des Spannkörpers durch ein Verstellelement einstellbar sein. Hierdurch kann die Spannung des Spannkörpers stufenlos oder stufenweise eingestellt werden, wodurch diese auf Bauteile unterschiedlicher Größe und Gewichts angepasst werden kann. Hierfür können verschiedene Rastpunkte an Halterungen des Spannkörpers vorgesehen werden. Am Beispiel eines Netzes als Spannkörper kann das Netz mit Laschen ausgeführt und dort in Rastpunkten eingehängt werden.

Um in Abhängigkeit der Bearbeitungsaufgabe spezifische Lösungen bereitstellen zu können, können unterschiedliche Materialkombinationen für Spannkörper und Verstellelement verwendet werden. Mögliche Kombinationen stellen beispielsweise ein starrer Spannkörper mit flexibler Halterung, ein elastischer Spannkörper mit starrer Halterung, ein elastischer Spannkörper und eine elastische Halterung sowie ein starrer Spannkörper und eine starre Halterung dar. Das Bauteil kann auch zwischen starren und weniger elastischen Halterungen gespannt werden. Der Spannmechanismus kann sich außerhalb einer Rahmenkonstruktion und optional auch außerhalb eines Strahlbereichs befinden.

Nach einer weiteren vorteilhaften Ausführungsform kann der Spannkrafterzeuger eine den Spannkörper mit einer äußeren Kraft beaufschlagende Kraftquelle aufweisen. Alternativ oder zusätzlich zu einer inhärenten Elastizität des Spannkörpers kann eine solche äußere Kraftquelle dafür sorgen, dass das Bauteil durch den Spannkörper eingespannt wird. In diesem Fall muss der Spannkörper nicht elastisch ausgebildet sein, sondern kann als vergleichsweise starres Sieb oder starrer Körper (Lochplatte, Korb, Schale) ausgebildet sein, wobei die erforderliche Spannkraft dann durch die äußere Kraftquelle, beispielsweise eine Feder oder ein Antrieb (z.B. Stellzylinder) bereitgestellt wird. In diesem Fall können zwei oder mehr Spannkörper relativ zueinander bewegbar ausgeführt werden, wodurch das Bauteil gespannt, fixiert oder bewegt werden kann, oder wodurch ein Öffnen und Schließen oder eine automatisierte Bestückung der Vorrichtung möglich wird. Die Relativbewegung kann durch eine Befestigung und Bewegung oder Betätigung des oder der Spannkörper an beweglichen Achsen, Aktoren, Führungen, Zylindern, Seilwinden, Wellen oder Rollen ermöglicht werden.

Auch können ein oder mehrere Spannkörper an einer Halterung wie einem Rahmen, an Säulen, an Stangen, an Balken, an konstruktiven Versteifungen oder an Drähten befestigt oder aufgespannt sein. An den Halterungen können u.a. hakenähnliche Befestigungselemente vorhanden sein, wodurch sich diese gegenseitig aufnehmen und durch die eigene und die Gewichtskraft des Bauteils zusammengehalten werden.

Nach einer weiteren vorteilhaften Ausführungsform kann der Spannkrafterzeuger eine Torsion und/oder ein Einrollen des Spannkörpers bewirken. So kann das Bauteil beispielsweise zunächst auf einem Spannkörper abgelegt werden, der als streifenförmiger Bahnabschnitt aus einem Siebmaterial, einer perforierten Folie oder dergleichen ausgebildet ist. Wenn anschließend die beiden Enden des streifenförmigen Bahnabschnitts (beispielsweise durch zwei motorische Antriebe) gegenläufig verdreht werden, wird der Spannkörper tordiert bzw. verwunden, wodurch das Bauteil zunächst in den Spannkörper eingewickelt bzw. eingerollt wird. Anschließend ist das Bauteil in dem Spannkörper eingespannt und kann beispielsweise mit Fluid beaufschlagt werden. Hierbei kann die Spannkraft durch den Grad der Torsion variiert werden.

Alternativ oder zusätzlich ist es hierbei auch möglich, das Bauteil im eingespannten Zustand zu rotieren, indem beide Antriebe gleichsinnig und synchron in Drehung versetzt werden, wodurch eine Entpulverung durch die entstehende Zentrifugalkraft bewirkt werden kann. Die Bearbeitung, Reinigung oder Entpulverung kann auch durch Schwingungen bzw. Vibrationen unterstützt werden. Außerdem führt dies zu einer leichten Bewegung des Bauteils im Spannelement, wodurch eine dauerhafte Abdeckung identischer Flächenbereiche am Bauteil vermieden wird. Dazu kann entweder an der Aufnahme der Vorrichtung oder an der Aufnahme der Maschine ein Vibrationsmotor mit Unwuchtgewicht montiert werden. Daneben ist auch die Schwingungsanregung mit Piezoaktoren, Schallwellen, etc. möglich.

Nach einer weiteren vorteilhaften Ausführungsform kann der Spannkörper an zumindest einer beweglichen Achse montiert werden, wodurch die Spannaufnahme geöffnet und geschlossen werden kann.

Nach einer weiteren vorteilhaften Ausführungsform kann der Spannkörper eine perforierte Folie aufweisen, aus der insbesondere eine Bahn, ein Beutel oder ein Schlauch gebildet ist. Im Falle eines perforierten Beutels kann das Bauteil in dem Beutel platziert werden, wobei in diesem Fall der Spannkrafterzeuger durch das Eigengewicht des Bauteils gebildet ist. Dies lässt sich am Beispiel eines Salatkopfes verdeutlichen, der in einer Einkaufstüte gehalten wird. In diesem Fall drückt die Gewichtskraft des Salatkopfes diesen nach unten, wodurch sich die Wandungen der Tüte an den Salatkopf anschmiegen und diesen dadurch zwischen den Wandungen einspannen. In gleicher Weise kann ein Bauteil in einem perforierten Beutel, aber auch in einem beutelförmigen Netz gehalten werden, um dieses darin einzuspannen und zu bearbeiten.

Es können für den Spannkörper neben geradlinigen Gitteranordnungen auch Schräggitter oder Wabenstrukturen verwendet werden.

Der Spannkörper kann zweidimensional, dreidimensional oder auch aus unterschiedlichen Werkstoffen zusammengesetzt sein.

Stränge des Spannkörpers können schlauchförmig bzw. innen hohl und perforiert ausgeführt sein und mit einem Fluid zur Reinigung oder Bearbeitung des Bauteils beaufschlagt werden. Außerdem kann das Bauteil durch das austretende Fluid bewegt werden oder in einem Schwebezustand gehalten werden.

Das Bauteil kann durch den Spannkörper teilweise oder vollständig umschlossen werden. Die Umschließung und die dadurch resultierende Spannung kann durch die Auslegung und Fertigung des Spannkörpers variiert und somit auf ein oder mehrere individuelle Bauteile angepasst werden.

Der Spannkörper kann durch seine Vorspannung unter Ausnutzung der Elastizität der eingesetzten Materialien und Spannelemente selbst nachspannen und somit auch ein Bauteil, das während der Bearbeitung, Reinigung, Entpulverung oder Entsandung kleiner wird, kontinuierlich ausreichend spannen.

Der Spannkörper kann beispielsweise aus Elastomeren, thermoplastischen Elastomeren, Thermoplasten oder Gewebewerkstoffen hergestellt sein.

Ein oder mehrere Spannelemente können an einer Halterung wie einem Rahmen, an Säulen, an Stangen, an Balken, an konstruktiven Versteifungen oder an Drähten befestigt oder aufgespannt werden.

Ein Rahmen kann über Haken, Haltenasen, Arretierungspunkte, Bolzen oder Pins verfügen, durch die die Spannung des Spannkörpers justiert werden kann. Dafür können an der Spannaufnahme Bohrungen, Aussparungen oder Laschen vorhanden sein.

Ein Spannmechanismus zum Spannen von elastischen Spannelementen oder zur Bewegung von starren Elementen außerhalb einer Rahmenkonstruktion kann sich außerhalb eines Strahlbereichs, oder gekapselt innerhalb des Strahlbereichs befinden, wodurch dieser auch vor Strahlmittel und Verunreinigungen geschützt ist.

Eine oder mehrere Halterungen können eine Relativbewegung durch eine Befestigung und Bewegung oder Betätigung an beweglichen Achsen, Aktoren, Führungen, Zylinder, Seilwinden, Wellen oder Rollen durchführen, wodurch das Bauteil gespannt werden kann oder das Öffnen und Schließen und somit ein Be- und Entladevorgang mit dem Bauteil ermöglicht wird.

Eine Kombination aus Rahmen und Bauteil oder aus einzelnen oder mehreren Spannaufnahmen und Bauteil kann durch die Aufnahme als Handlings- und Transporthilfe verwendet werden.

Ein oder mehrere additiv gefertigte, auch geometrisch unterschiedliche Bauteile können in einzelnen oder mehreren der beschriebenen Spannaufnahmen fixiert oder transportiert werden.

Nachfolgend wird die vorliegende Erfindung rein beispielhaft anhand vorteilhafter Ausführungsformen und unter Bezugnahme auf die Zeichnungen beschrieben. Es zeigen:
- Fig. 1: eine perspektivische Explosionsansicht einer Spannvorrichtung;
- Fig. 2: die Spannvorrichtung von Fig. 1 im montierten Zustand;
- Fig. 3: eine perspektivische Ansicht einer weiteren Ausführungsform einer Spannvorrichtung; und
- Fig. 4: eine weitere Ausführungsform einer Spannvorrichtung.

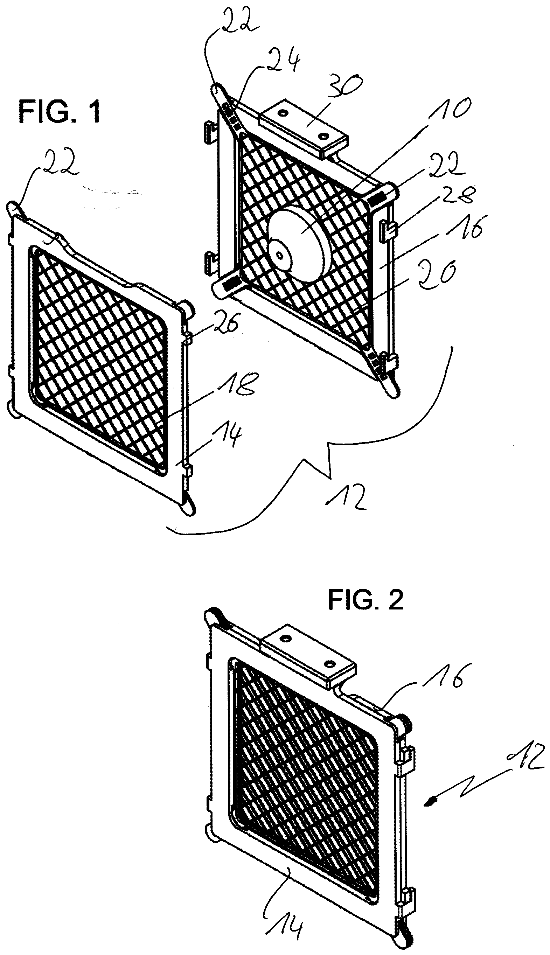

Fig. 1 zeigt eine Explosionsansicht einer Vorrichtung zur Aufnahme, zur Befestigung, zum Handling und zur Bearbeitung oder Reinigung eines oder mehrerer Bauteile 10 im nicht entpulverten oder auch entpulverten Zustand. Die Spannvorrichtung ist auch für empfindliche und komplexe Bauteile geeignet, führt zu keinen oder nur geringen Verdeckungen und erfordert keine Umspannung. Die in Fig. 1 dargestellte Spannvorrichtung dient zum Einspannen zumindest eines insbesondere additiv hergestellten Bauteils 10 und weist bei dem dargestellten Ausführungsbeispiel eine Spannaufnahme 12 auf, die bei dem dargestellten Ausführungsbeispiel aus zwei viereckigen Rahmen 14 und 16 zusammengesetzt ist, die miteinander koppelbar sind. Die Rahmen 14 und 16 können quadratisch sein, was ein Zentrieren des Bauteils 10 erleichtert. In jedem Rahmen ist ein Spannkörper 18, 20 fixiert, der bei dem dargestellten Ausführungsbeispiel in Form eines elastischen Netzes gestaltet ist. Hierbei ist jedes Netz 18, 20 im Bereich seiner Ecken mit Spannlaschen 22 versehen, die an Rastzapfen 24 der Rahmen 14, 16 eingehängt sind. Hierdurch lässt sich die Spannung der elastischen Netze 18, 20 variieren.

Eine Kopplung der beiden Rahmen 14 und 16 erfolgt über Rastnasen 26 des Rahmens 14, die in Rastvorsprünge 28 des Rahmens 16 eingehakt werden können. Zum Einspannen kann das Bauteil 10 zunächst auf dem Netz eines Rahmens platziert werden, woraufhin dann der andere Rahmen auf den ersten Rahmen aufgesetzt wird und beide Rahmen miteinander gekoppelt werden, wodurch sich der in Fig. 2 (ohne Bauteil 10) dargestellte Zustand ergibt.

Wie Fig. 2 verdeutlicht, ist an der Spannvorrichtung, bei dem dargestellten Ausführungsbeispiel an dem Rahmen 16, eine Maschinenhalterung 30 vorhanden, mit der die Spannvorrichtung gehalten, gehandhabt und in einer Maschine fixiert werden kann.

Wenn ein Bauteil 10 in der vorstehend beschriebenen Spannvorrichtung zwischen den beiden Spannkörpern 18 und 20 eingespannt ist, ist es fest jedoch beschädigungsfrei in der Spannvorrichtung gehalten, da die Elastizität der Spannkörper 18, 20 eine kontinuierliche Spannkraft auf das Bauteil 10 ausübt. Sollte sich das Volumen des Bauteils durch Entpulverung verringern, während beispielsweise ein Fluidstrahl durch die pulverdurchlässigen Spannkörper 18, 20 hindurchgeführt wird, bleibt das Bauteil 10 aufgrund der Elastizität der Spannkörper 18 und 20 eingespannt.

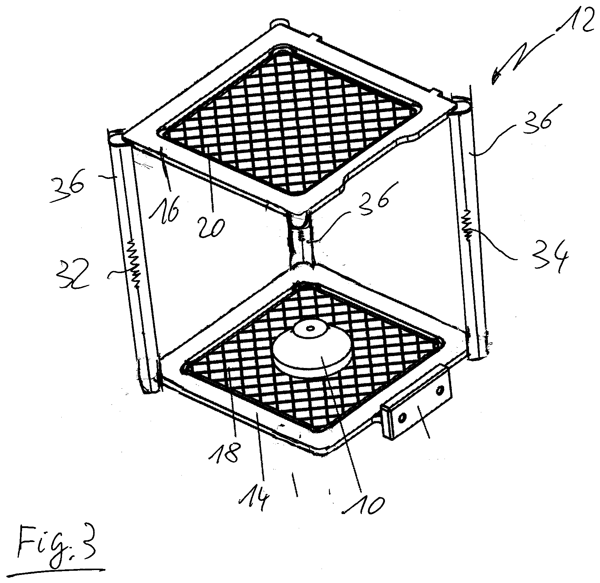

Fig. 3 zeigt eine weitere Ausführungsform einer Spannvorrichtung für ein additiv hergestelltes Bauteil 10. Bei dieser Ausführungsform weist die Spannaufnahme 12 wiederum zwei Rahmen 14 und 16 auf, die jeweils einen Spannkörper 18 und 20 fixieren. Allerdings sind bei dieser Ausführungsform die Spannkörper 18 und 20 nicht notwendigerweise aus elastischem Material hergestellt, d.h. diese können als vergleichsweise starres Gitter, Sieb oder dergleichen ausgebildet sein. Auch hier wird das Bauteil 10 zunächst auf den unteren Spannkörper 18 aufgelegt, woraufhin dann der obere Spannkörper 20 auf den unteren Spannkörper abgesenkt wird. Als Spannkrafterzeuger dient bei dieser Ausführungsform einerseits die Schwerkraft, andererseits kann der Spannkrafterzeuger eine äußere Kraftquelle aufweisen, die zumindest einen Spannkörper mit einer äußeren Kraft beaufschlagt, beispielsweise Federn 32 und 34.

Bei der Ausführungsform von Fig. 3 ist der obere Rahmen 16 an Ecken in Führungen 36 geführt (die vordere Führung ist zur besseren Darstellung nicht gezeigt), so dass der obere Rahmen 16 parallel zu dem unteren Rahmen 18 abgesenkt werden kann. Auch hier ergeben sich die gleichen Vorteile wie bei der vorstehend beschriebenen Ausführungsform.

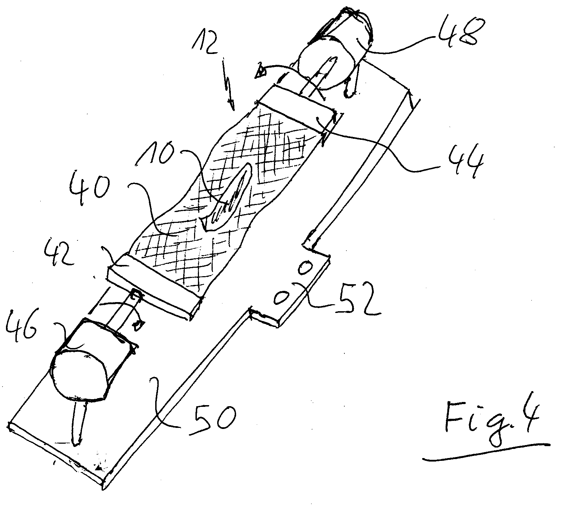

Fig. 4 zeigt eine weitere Ausführungsform einer Spannvorrichtung für ein additiv hergestelltes Bauteil 10, wobei die Spannvorrichtung bei dieser Ausführungsform eine Spannaufnahme 12 aufweist, deren Spannkörper 40 ein bahnförmiger Abschnitt eines pulverdurchlässigen Materials ist, beispielsweise eines nicht notwendigerweise elastischen Sieb- oder Netzmaterials. Der Spannkörper 40 ist bei dem Ausführungsbeispiel von Fig. 4 an seinen beiden äußeren Enden in Halterungen 42 und 44 eingespannt, die jeweils von einem Antrieb 46 und 48 um eine gemeinsame Drehachse rotiert werden können, wobei die beiden Antriebe 46 und 48 auf einer Basisplatte 50 montiert sind, die mit einer Maschinenhalterung 52 versehen ist.

Bei dieser Ausführungsform wird das Bauteil 10 zunächst auf den Spannkörper 40 gelegt, woraufhin die Antriebe 46 und 48 gegenläufig angetrieben werden. Hierdurch verwindet sich der Spannkörper 40 und wickelt dabei das Bauteil 10 in sich ein. Die gewünschte Spannung kann hierbei durch den Grad der Verdrehung gewählt werden. Anschließend kann das Bauteil durch den Spannkörper 40 hindurch mit Fluid beaufschlagt werden. Alternativ oder zusätzlich ist es möglich, die beiden Antriebe 46 und 48 in diesem Zustand gleichsinnig und synchron miteinander in Drehung zu versetzen, so dass die Spannung, mit der das Bauteil 10 innerhalb des Spannkörpers 40 gehalten ist, aufrechterhalten bleibt und gleichzeitig Pulverreste durch Fliehkraft von dem Bauteil 10 entfernt werden können.

Bei allen Ausführungsformen kann die Spannvorrichtung bzw. die Spannaufnahme 12 für ein Entpulvern in Schwingung versetzt und/oder rotiert werden.

## Patentansprüche

1. Spannvorrichtung für zumindest ein zu bearbeitendes additiv hergestelltes Bauteil (10), die eine Spannaufnahme (12) aufweist, deren Spannkörper (18, 20, 40) pulverdurchlässig ist, wobei die Spannaufnahme (12) durch einen Spannkrafterzeuger (32, 34, 46, 48) auch bei einer Volumenverringerung des Bauteils (10) während dessen Bearbeitung gegen dieses gespannt bleibt, wobei der Spannkrafterzeuger insbesondere durch die Elastizität des Spannkörpers (18, 20) gebildet ist.

2. Spannvorrichtung nach Anspruch 1,
wobei die Spannaufnahme (12) aus mehreren miteinander koppelbaren Aufnahmeelementen gebildet ist, die insbesondere jeweils einen Rahmen (14, 16) aufweisen.

3. Spannvorrichtung nach einem der vorstehenden Ansprüche,
wobei die Spannaufnahme (12) zumindest ein Trennelement aufweist, durch das innerhalb der Spannaufnahme (12) zumindest zwei Abteile gebildet sind.

4. Spannvorrichtung nach einem der vorstehenden Ansprüche,
wobei die Spannaufnahme (12) mit zumindest einer Maschinenhalterung (30, 52) versehen ist.

5. Spannvorrichtung nach einem der vorstehenden Ansprüche,
wobei der Spannkörper (18, 20, 40) einen verformbaren Materialbahnabschnitt aufweist, insbesondere ein Sieb und/oder ein Gitter.

6. Spannvorrichtung nach einem der vorstehenden Ansprüche,
wobei der Spannkörper (18, 20, 40) ein Netz aufweist.

7. Spannvorrichtung nach einem der vorstehenden Ansprüche,
wobei die Spannung des Spannkörpers (18, 20, 40) durch ein Verstellelement (22, 46, 48) einstellbar ist.

8. Spannvorrichtung nach einem der vorstehenden Ansprüche,
wobei der Spannkrafterzeuger eine den Spannkörper (18, 20) mit einer äußeren Kraft beaufschlagende Kraftquelle (32, 34, 46, 48) aufweist.

9. Spannvorrichtung nach Anspruch 8,
wobei der Spannkrafterzeuger (46, 48) eine Torsion und/oder ein Einrollen des Spannkörpers (40) bewirkt.

10. Spannvorrichtung nach einem der vorstehenden Ansprüche,
wobei der Spannkörper (18, 20, 40) eine perforierte Folie aufweist, aus der insbesondere ein Beutel oder ein Schlauch gebildet ist.

11. Spannvorrichtung nach einem der vorstehenden Ansprüche 1-9,
wobei der Spannkörper (18, 20, 40) Einzelelemente wie Fäden, Schnüre, Drähte, Leinen, perforierte Streifen und Bänder, Seile oder Kombinationen hieraus aufweist.

12. Spannvorrichtung nach einem der vorstehenden Ansprüche mit einem darin angeordneten additiv hergestellten Bauteil (10),
wobei der Spannkrafterzeuger durch das Gewicht des Bauteils (10) gebildet ist.

13. Verfahren zum Bearbeiten eines additiv hergestellten Bauteils, wobei das Bauteil (10) in einer Spannaufnahme (12) einer Spannvorrichtung nach einem der vorstehenden Ansprüche eingespannt und mit einem Fluidstrahl beaufschlagt wird, der durch den pulverdurchlässigen Spannkörper (18, 20, 40) der Spannaufnahme (12) hindurchgeführt wird.

14. Verfahren nach Anspruch 13,
wobei die Spannaufnahme (12) in Schwingungen versetzt und/oder rotiert wird.

15. Verfahren nach Anspruch 13 oder 14,
wobei der Spannkörper (40) zum Einspannen des Bauteils (10) zunächst tordiert und anschließend im tordierten Zustand rotiert wird.
